# EUROPÄISCHE PATENTSCHRIFT

(11) **EP 0 583 553 B1**
(45) Veröffentlichungstag und Bekanntmachung des Hinweises auf die Patenterteilung: **09.10.1996**
(21) Anmeldenummer: 93107545.1
(22) Anmeldetag: 10.05.1993
(51) Int. Cl.: B29B 17/02, B03B 9/06

(54) **Verfahren zur Aufbereitung von Reststoffen bituminöser Dachabdichtungen**
Process for preparing waste bituminous roofing material
Procédé de préparation de déchets de couverture de toit bitumineuse

(30) Priorität: 17.08.1992 DE 4227159
(43) Veröffentlichungstag der Anmeldung: 23.02.1994
(73) Patentinhaber: VEDAG GmbH, D-60388 Frankfurt (DE)
(72) Erfinder: Vogel, Hans-Günter, W-6236 Eschborn (DE); Haushofer, Bert, W-6240 Königstein/Ts. (Johanniswald) (DE); Heep, Werner, W-6000 Frankfurt/Main 1 (DE)
(74) Vertreter: Berkenfeld, Helmut, Dipl.-Ing.

(56) Entgegenhaltungen:
- DE-A- 4 128 014
- US-A- 3 843 060
- US-A- 4 199 109
- US-A- 4 330 340

## Beschreibung

Die Erfindung betrifft ein Verfahren zum Aufbreiten von Reststoffen bituminöser Dachabdichtungen.

Bei der Verlegung und der Sanierung von flachen Dächern oder deren Abriß fallen in Deutschland jährlich Zirka 200.000 t Reststoffe an, die zu etwa vier Fünftel aus bituminösen Dachhäuten und zu etwa einem Fünftel aus Wärmedämmstoffen bestehen. Die Dämmstoffe sind mit den bituminösen Materialien üblicherweise fest verbunden und liegen in dem daraus resultierenden Bauschutt als Konglomerat vor, so daß eine für die Wiederverwendung notwendige Trennung nicht möglich ist. Aus diesem Grunde kann dieser Bauschutt nur deponiert oder durch Verbrennen entsorgt werden.

Ein Verfahren zur Wiederverwendung von Reststoffen bituminöser Dichtungsmaterialien (DE 41 28 014 A1) ist bekannt. Bei diesem Verfahren werden aus der Fertigung stammende neue Dichtungsbahnen oder bei Erneuerungsarbeiten anfallende alte Dichtungsbahnen eingesetzt. Die bei Erneuerungsarbeiten anfallenden Dichtungsbahnen werden sorgfältig von anderem Bauschutt getrennt. Beide Arten von Dichtungsbahnen müssen frei von Dämmstoffen sein. Die Reststoffe werden vorzerkleinert, unter Bewegung aufgeschmolzen und homogenisiert. Die Schmelze wird dann in flüssigem Zustand gemahlen und gegebenenfalls unter Zusatz üblicher Inhaltsstoffe zu Dichtungsmaterialien verarbeitet. Dieses Verfahren läßt sich aber nicht auf mit Dämmstoffen verbundenes bituminöses Material übertragen, insbesondere wenn der Dämmstoff aus dem häufig verwendeten Polystyrolschaum besteht, der sich nur schwer in bituminöse Massen einarbeiten läßt.

Die Praxis verlangt heute, daß auch die Reststoffe von Dachabdichtungen mit einem Gehalt an verschiedenartigen Wärmedämmstoffen aufgearbeitet und recycelt werden. Der Erfindung liegt die Aufgabe zugrunde, ein Verfahren zum Aufarbeiten solcher Reststoffe zu entwickeln. Die Lösung für diese Aufgabe ergibt sich nach der Erfindung mit einem Verfahren, das sich dadurch auszeichnet, daß die von Fremdkörpern befreiten Dachabdichtungen zunächst zerschnitten und abgeschält und die abgeschälten Stücke auf eine Größe von 6 bis 20 mm zerkleinert werden und das dabei gewonnene Granulat durch Windsichten in mindestens zwei Fraktionen mit unterschiedlicher Dichte aufgeteilt wird, wobei die schwere Fraktion die bituminösen Stoffe einschließlich geringer Mengen anhaftender Dämmstoffe und die leichtere Fraktion ausschließlich Dämmstoffe enthält, und daß die schwere bituminöse Fraktion unter Zusatz von üblichen Füllstoffen zu einem griesartigen Pulver mit einer mittleren Korngröße von 0,5 bis 2,0 mm aufgemahlen wird.

Ein Verfahren zum Herstellen von thermoplastischen Schnipseln ist bekannt (US-A-3 843 060). Bei diesem Verfahren werden in einer ersten Stufe gebrauchte, aus einem thermoplastischen Kunststoff bestehende Folien, die auf ihrer Rückseite mit einem Baumwollgewebe belegt und verstärkt sind, zerkleinert. Die zerkleinerten Teilchen werden in einem Zyklon gegeben. Diesen verlassen zwei Gemische, von denen das eine aus thermoplastischen Schnipseln und zerkleinertem Baumwollgewebe besteht. Dieses Gemisch wird einem Windsichter zugeführt. Dieser trennt das Gemisch in die schwereren thermoplastischen Schnipsel und die leichteren Baumwollgewebeteilchen auf. Die Schnipsel und die Gewebeteilchen verlassen den Windsichter an verschiedenen Stellen und können damit getrennt gesammelt und einer getrennten Wiederverwendung zugeführt werden.

Bei dem erfindungsgemäßen Verfahren werden jedoch nicht feste und spröde, aus einem thermoplastischen Kunststoff bestehende Folien, sondern bituminöse Dachabdichtungen mit an diese angeklebten Isolierschichten aufgearbeitet. Bei einem solchen Ausgangsstoff würde die unmittelbare Anwendung des bekannten Verfahrens nicht zum Erfolg führen. Es kann zu örtlicher Überhitzung und damit zu einer weiteren Schädigung des durch Alterung bereits versprödeten Bitumens kommen. Es hat sich herausgestellt, daß dieser weitere Abbau des Bitumens weitgehend vermieden wird, wenn die bituminöse Fraktion in einer Feststoffmühle, wie beispielsweise einer Kreuzschlagmühle, unter Zusatz von zusätzlichen mineralischen Füllstoffen, die ohnehin bei der Herstellung der jeweiligen Masse eingesetzt werden, zu einem griesartigen Pulver mit einer mittleren Korngröße von 0,5 bis 2,0 mm aufgemahlen wird. Das Einarbeiten von etwa 10 bis 30 Gew.-% dieses Pulvers in bituminöse Dichtungsmassen führt zu einer stärkeren Erweiterung des Plastizitätsbereiches als der Zusatz von üblichem Schiefer- oder Kalksteinmehl. Dieser Zusatz von Füllstoffen und das Aufmahlen der Fraktion wird von dem bekannten Verfahren, das sich mit vollständig anderen Ausgangsstoffen befaßt, nicht nahegelegt.

Bei der Sanierung eines Flachdaches wird der alte Dachbelag abgetragen und muß entsorgt werden. Die Gemeinden sehen ihn als Sondermüll an. Sie belegen das Entsorgen einer Tonne alten Dachbelages mit Kosten von bis zu einigen hundert DM. Die Bauunternehmer sind daher bereit, einer Firma, die alte Dachbeläge zur Aufbereitung annimmt, hierfür einige wenige hundert DM pro Tonne zu zahlen. Das erfindungsgemäße Verfahren zum Aufbereiten von Reststoffen bituminöser Dachabdichtungen hat daher große wirtschaftliche Bedeutung.

Die Dachabdichtung wird mit handelsüblichen Dachschneidern in z. B. 50 cm breite und 2 m lange Streifen geschnitten und mit einer ebenfalls im Handel erhältlichen Dachschälmaschine von der Dachoberfläche abgehoben. Die Streifen bestehen in der Regel aus einer dreilagigen bituminösen Dachabdichtung, einer Isolierschicht aus Kork, organischen oder anorganischen Hartschäumen oder Mineralwolle unterschiedlicher Dicke und ggf. aus einer bituminösen Dampfsperre und einer Ausgleichsschicht. Sie werden in einer mobilen oder stationären Shredder-Anlage zu Granulat zerkleinert. Die Versuche haben gezeigt, daß sich diese Altdachmaterialien im Gegensatz zu frischen Dachbahnabfällen sehr gut zerkleinern lassen, ohne daß die Werkzeuge verschmieren und die Shredder-Anlage blockiert wird. Dies ist vermutlich darauf zurückzuführen, daß einerseits der Bitumenanteil durch Alterung versprödet ist und andererseits die Dämmstoffe wie ein werkzeugreinigendes Trennmittel wirken.

Das erhaltene Granulat läßt sich beispielsweise in einem Windsichter oder einer Zyklonkaskade leicht trennen. Da auf einem Dach meist nur ein Wärmedämmstoff vorliegt, genügt eine Auftrennung in zwei Fraktionen. Sollten mehrere Dämmstoffe vorliegen, wie z. B. Polystyrolschaum und Mineralwolle, die sich nicht sortenrein abschälen lassen, so ist es sinnvoll, das Granulat in drei Fraktionen aufzutrennen. Die schwerste Fraktion enthält die bituminösen Stoffe mit anhaftendem Dämmstoff, die mittlere Fraktion besteht aus Mineralwolle und ggf. Spuren von Polystyrol, und die leichte Fraktion enthält ausschließlich Polystyrol. Das Polystyrolschaum-Granulat wird vorzugsweise kompaktiert und dem Hersteller des Schaumes zur Wiederverwendung zugeleitet. Die meist kunststoffgebundene Mineralwolle kann ebenfalls dem Hersteller zurückgegeben werden. Die Kurzfasern können aufgeschmolzen und neu versponnen werden, wobei der Kunststoffanteil einschließlich Polystyrol verbrennt. Es ist aber auch möglich, die Mineralwoll-Granulate gemeinsam mit den bituminösen Granulaten zu verarbeiten.

Wenn die Granulate in einer mobilen Shredder-Anlage ohne Trennvorrichtung erzeugt werden, kann ein für bituminöse Massen üblicher Füllstoff, wie beispielsweise Schiefermehl oder Kalksteinmehl zugesetzt werden, der die bituminösen Granulate einpudert, damit sie bei der anschließenden Lagerung und dem Transport zu einer stationären Anlage nicht mit den Dämmstoff-Granulaten verkleben.

Nach der Auftrennung werden hier die Granulate in Silos gelagert und können dann in Silofahrzeugen oder abgefüllt in "big bags" zu den Verwendern transportiert werden, oder die Granulate werden entstaubt und zu brikettartigen Blöcken verpreßt.

Die bituminösen Granulate werden z. B. in einem Silo gemischt, bis eine etwa homogene Zusammensetzung erreicht ist. Die Mischung wird analysiert, um bei der Verarbeitung zu Dachbahnen, Bautenschutzmatten, Spachtelmassen oder Straßenbelägen feste Qualitätsmerkmale einhalten zu können.

Eine Zerkleinerung auf die bevorzugte Granulatgröße von 4 bis 10 mm ist für die meisten Anwendungsfälle durchaus ausreichend. Eine weitere Zerkleinerung bringt jedoch Vorteile hinsichtlich der Einarbeitung in die jeweiligen Massen, da die feineren Granulate wegen ihrer größeren Oberfläche sich unter sonst gleichen Bedingungen schneller lösen und daher thermisch weniger belastet werden müssen. Bei der Herstellung von feindispersen Deckmassen für Dachbahnen oder von Vergußmassen müssen die Granulate mit ihren Faserbestandteilen und körnigen, mineralischen Anteilen im heißflüssigen Zustand zusätzlich fein gemahlen werden, wie dies in der älteren Anmeldung (P 41 28 014.8) beschrieben ist.

Es hat sich ferner herausgestellt, daß Beimischungen von Polystyrol zu Bitumenmischungen vorwiegend auf der Basis von B 200 bis zur Grenze von 5 % eher eine positive Auswirkung auf die Qualität haben.

Die Erfindung wird anhand der Verfahrensskizze einer stationären Anlage näher erläutert.

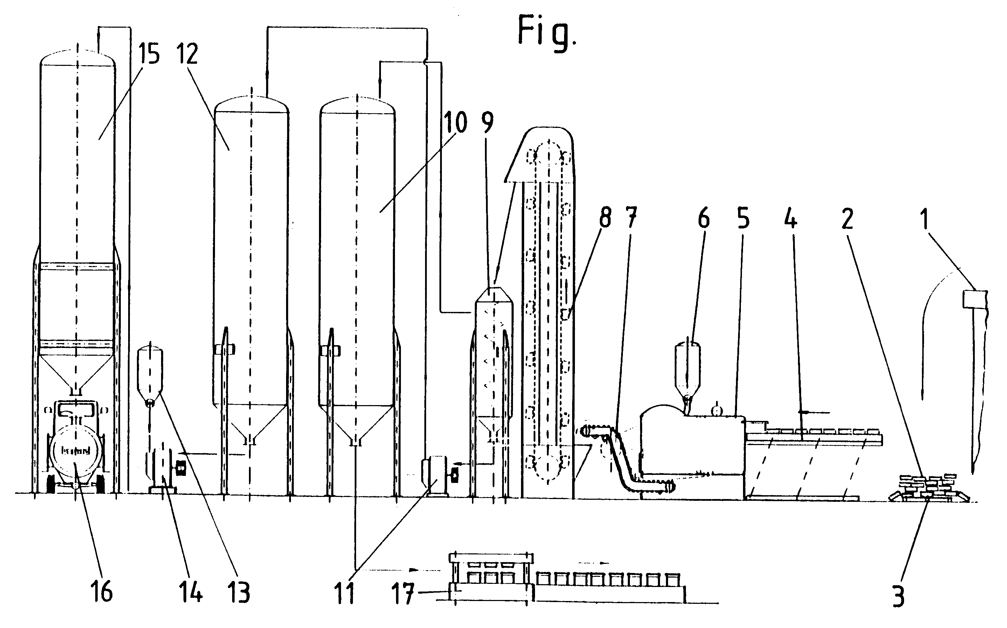

Die von dem Flachdach 1 in der Figur abgeschälten 1 m langen und 0,5 m breiten Streifen 2 der Dachabdichtung aus einer bituminösen Dampfsperre, einer 60 mm dicken Hartschaumschicht aus Polystyrol und einer dreilagigen bituminösen Abdichtung werden auf Paletten 3 gepackt und zu einer stationären Aufbereitungsanlage gebracht.

Die Streifen 2 werden hier auf den Schwingförderer 4 gelegt, der sie in den Shredder 5 fördert. Aus dem Behälter 6 kann zusätzlich Kalksteinmehl in den Shredder 5 dosiert werden. Das Granulatgemisch aus 6 bis 10 mm großen Dämmstoff- und bituminösen Teilchen wird über das Steilförderband 7 in das Becherwerk 8 gefördert und von dort auf den Windsichter 9 aufgegeben, dessen Gebläse so eingestellt wird, daß im oberen Bereich kein mit bituminösen Stoffen verunreinigter Polystyrolschaum ausgetragen wird. Die reinen Polystyrolschaum-Granulate werden in den Silo 10 geblasen. Die schwere Fraktion aus maximal mit 5 % Polystyrol angereicherten bituminösen Granulaten wird mit Hilfe eines Gebläses 11 in den Silo 12 gefördert. Auf diese Weise lassen sich ca. 95 Gew.-% des Polystyrols zurückgewinnen. Das Polystyrolschaum-Granulat wird der Presse 17 zugeführt und dort ohne zusätzliche Erwärmung brikettiert. Dadurch wird das Volumen erheblich reduziert und der Reststoff läßt sich beim Wiederverwender leichter handhaben. Er kann zu neuen Schaumstoffplatten verarbeitet werden. Das Granulat kann aber auch in Silofahrzeugen oder "big bags" abgefüllt und als Bodenverbesserungsmittel oder für die Fertigung von Leichtbeton eingesetzt werden.

Das bituminöse Granulat aus Silo 12 wird unter Zusatz von Schiefermehl aus dem Behälter 13 in der Kreuzschlagmühle 14 auf einen Durchmesser von maximal 2,0 mm zerkleinert. Das griesartige Pulver wird im Silo 15 zwischengelagert und homogenisiert. Es wird dann in Silofahrzeugen 16 verladen oder zu Briketts verpreßt zum Wiederverwender gefahren und dort den bituminösen Massen zugesetzt.

## Patentansprüche

1. Verfahren zum Aufarbeiten von Reststoffen bituminöser Dachabdichtungen, dadurch gekennzeichnet, daß die von Fremdkörpern befreiten Dachabdichtungen zunächst zerschnitten und abgeschält und die abgeschälten Stücke auf eine Größe von 6 bis 20 mm zerkleinert werden und das dabei gewonnene Granulat durch Windsichten in mindestens zwei Fraktionen mit unterschiedlicher Dichte aufgeteilt wird, wobei die schwere Fraktion die bituminösen Stoffe einschließlich geringer Mengen anhaftender Dämmstoffe und die leichtere Fraktion ausschließlich Dämmstoffe enthält, und daß die schwere bituminöse Fraktion unter Zusatz von üblichen Füllstoffen zu einem griesartigen Pulver mit einer mittleren Korngröße von 0,5 bis 2,0 mm aufgemahlen wird.

2. Verfahren nach Anspruch 1, dadurch gekennzeichnet, daß die Dämmstoff-Fraktion kompaktiert wird.

3. Verfahren nach Anspruch 1, dadurch gekennzeichnet, daß das aus der bituminösen Fraktion aufgemahlene griesartige Pulver kompaktiert wird.

## Claims

1. Process for the re-conditioning of residues of bituminous roof-sealing materials, characterized in that the roof-sealing material, freed from extraneous bodies, is first cut up and stripped off, the stripped parts are reduced to a size of from 6 to 20 mm, and the granular material obtained thereby is divided by air sifting into at least two fractions of different density, wherein the heavy fraction contains the bituminous substances including small quantities of adhering insulating materials and the lighter fraction exclusively contains insulating materials, and that the heavy, bituminous fraction is ground, with the addition of conventional fillers, to form a grit-like powder with an average grain size of from 0.5 to 2.0 mm.

2. Process according to Claim 1, characterized in that the insulating-material fraction is compacted.

3. Process according to Claim 1, characterized in that the grit-like powder ground from the bituminous fraction is compacted.

## Revendications

1. Procédé de traitement de déchets de couvertures de toit bitumineuses, caractérisé en ce qu'on découpe et décortique tout d'abord la couverture de toit libérée de corps étrangers, en ce que les morceaux décortiqués sonst fragmentés à une dimension de 6 à 20 mm et en ce que le produit de granulation ainsi obtenu est divisé en au moins deux fractions ayant des densités différentes par élutriation, la fraction lourde contenant les substances bitumineuses, y compris de faibles quantités de matières isolantes adhérentes, et la fraction légère contenant exclusivement des matières isolantes, et que la fraction bitumineuse, lourde, est, avec addition de substances de remplissage courantes, broyée en une poudre granuleuse ayant une dimension de grain moyenne de 0,5 à 2,0 mm.

2. Procédé suivant la revendication 1, caractérisé en ce que la fraction de matière isolante est compactée.

3. Procédé suivant la revendication 1, caractérisé en ce que la poudre granuleuse broyée de la fraction bitumineuse est compactée.
